# EUROPÄISCHE PATENTSCHRIFT

(11) **EP 2 699 377 B1**
(45) Veröffentlichungstag und Bekanntmachung des Hinweises auf die Patenterteilung: **29.07.2015**
(21) Anmeldenummer: 12738080.6
(22) Anmeldetag: 13.07.2012
(51) Int. Cl.: B23K 20/12, B60B 35/00

(54) **VERFAHREN ZUR HERSTELLUNG VON FAHRWERKSKOMPONENTEN FÜR NUTZFAHRZEUGE DURCH REIBSCHWEISSEN UND ENTSPRECHENDE ACHSEINHEIT**
METHOD FOR PRODUCING CHASSIS COMPONENTS FOR COMMERCIAL VEHICLES BY MEANS OF FRICTION WELDING, AND CORRESPONDING AXLE UNIT
PROCÉDÉ DE FABRICATION DE COMPOSANTS DE DISPOSITIF DE ROULEMENT POUR VÉHICULES UTILITAIRES PAR SOUDAGE PAR FRICTION ET UNITÉ D'ESSIEU CORRESPONDANTE

(30) Priorität: 26.07.2011 DE 102011079799
(43) Veröffentlichungstag der Anmeldung: 26.02.2014
(73) Patentinhaber: SAF-HOLLAND GmbH, 63856 Bessenbach (DE)
(72) Erfinder: HOPPE, Matthias, 63165 Mühlheim am Main (DE)
(74) Vertreter: Müller Schupfner & Partner Patent- und Rechtsanwaltspartnerschaft mbB
(86) Internationale Anmeldenummer: PCT/EP2012/063760
(87) Internationale Veröffentlichungsnummer: WO 2013/014004

(56) Entgegenhaltungen:
- EP-A1- 2 168 707
- DE-B3-102004 034 142
- JP-A- 56 062 687
- JP-A- 2000 015 462
- US-A1- 2004 060 385
- US-A1- 2004 255 460

## Beschreibung

Die vorliegende Erfindung betrifft ein Verfahren zur Herstellung von Fahrwerkskomponenten für Nutzfahrzeuge gemäß dem Oberbegriff des Anspruchs 1 (siehe, z.B., JP 56/062687 A) und eine mit diesem Verfahren hergestellte Achseinheit gemäß dem Oberbegriff des Anspruchs 8 (siehe, z.B., US 2004/060385 A).

Bei bisher aus dem Stand der Technik bekannten Verfahren, werden Bauteile, die eine zylinderförmige Oberfläche umschließen, meist durch bekannte Schweißverfahren, wie das Gasschweißen oder das Lichtbogenschweißen, stoffschlüssig und dauerhaft aneinander festgelegt. Nachteilig ist hierbei der meist punktuelle Wärmeeintrag der zu gefährlichen Thermospannungen im Material führt. Weiterhin sind aus dem Stand der Technik auch diverse Reibschweißverfahren bekannt, bei denen ein zylinderförmiger Körper durch einen Keil oder Konus während des Reibschweißvorgangs aufgeweitet wird und das zu befestigende Bauteil an dem aufgeweiteten Teil des zylindrischen Körpers reibverschweißt wird. Der Nachteil bei diesem Verfahren ist, dass zum Einen der zylindrische Körper verformt werden muss und zum anderen die Aufweitung nur bei zylindrischen Körpern geringer Wandstärke möglich ist.

Aufgabe der vorliegenden Erfindung ist es also, ein Verfahren zur Herstellung von Fahrwerkskomponenten aufzuzeigen, bei welchem verschiedene Bauteile, unabhängig von ihrer Wandstärke, stoffschlüssig verbunden werden können.

Diese Aufgabe wird gelöst mit einem Verfahren gemäß Anspruch 1 und einer Achseinheit gemäß Anspruch 8. Weitere Vorteile und Merkmale ergeben sich aus den Unteransprüchen, wobei die gegenständlichen Merkmale der Unteransprüche des Verfahrens zur Herstellung von Fahrwerkskomponenten selbstver-ständlich auch zur näheren Beschreibung und Charakterisierung der Achseinheit verwendet werden können.

Erfindungsgemäß umfasst das Verfahren zur Herstellung von Fahrwerkskomponenten für Nutzfahrzeuge die Schritte: Bereitstellen eines ersten Bauteils und eines zweiten Bauteils, wobei das erste Bauteil einen ersten Kontaktbereich aufweist, in dem es im Wesentlichen rotationssymmetrisch um eine Rotationsachse ausgebildet ist, und wobei das zweite Bauteil einen zweiten Kontaktbereich aufweist, der gekrümmt ist und dem ersten Kontaktbereich gegenüberliegend angeordnet wird; Versetzen eines der Bauteile in Rotation um die Rotationsachse relativ zum jeweils anderen Bauteil; Gegeneinanderpressen der Bauteile, um zwischen dem zweiten Kontaktbereich und dem ersten Kontaktbereich Reibung und eine Anschmelzung des ersten und zweiten Kontaktbereichs zu erzeugen; und Verzögern der Rotation der Bauteile relativ zueinander, wobei die angeschmolzenen Bereiche in den festen Aggregatzustand übergehen und eine stoffschlüssige Verbindung zwischen dem ersten Bauteil und dem zweiten Bauteil hergestellt wird. In einem ersten Verfahrensschritt werden ein erstes und ein zweites Bauteil bereitgestellt, wobei die Bauteile jeweils einen Kontaktbereich aufweisen und wobei das erste Bauteil in seinem ersten Kontaktbereich im Wesentlichen rotationssymmetrisch um eine Rotationsachse ausgebildet ist. Das erste Bauteil ist bevorzugt die Achse eines Nutzfahrzeuges, wobei diese ihre größte Erstreckung längs der Rotationsachse aufweist und bevorzugt einen oder mehrere rotationssymmetrisch um diese Rotationsachse ausgebildete erste Kontaktbereiche aufweist. Das zweite Bauteil weist einen zweiten Kontaktbereich auf, welcher gekrümmt ist und dem ersten Kontaktbereich derart gegenüberliegend angeordnet wird, dass die Achse, um die sich der zweite Kontaktbereich im Wesentlichen krümmt, in Richtung des ersten Kontaktbereiches weist. Mit anderen Worten wird der zweite Kontaktbereich derart angeordnet, dass seine gekrümmte Seite bzw. Fläche den ersten Kontaktbereich zumindest bereichsweise umschließt. Erfindungsgemäß werden die beiden Bauteile in Rotation um die Rotationsachse, relativ zueinander versetzt. Es ist dabei bevorzugt, nur das erste Bauteil in Rotation zu versetzen und das zweite Bauteil ortsfest zu halten. Insbesondere, wenn das erste Bauteil besonders schwer oder besonders groß ist oder eine komplexe Geometrie aufweist, die sich nur schwer in Rotation versetzen lässt, kann es auch bevorzugt sein, dass das zweite Bauteil um das erste Bauteil herum rotiert, wobei das erste Bauteil ortsfest verbleibt. Die Rotationsgeschwindigkeit der beiden Bauteile relativ zueinander bestimmt gemeinsam mit der später zwischen den Bauteilen wirkenden Druck- bzw. der Anpresskraft, die wiederum eine Druckkraft zwischen den beiden Kontaktbereichen der Bauteile verursacht, die zwischen erstem und zweiten Kontaktbereich erzeugte Temperatur, welche wiederum ihrerseits zu einer Anschmelzung des Materials des ersten und/oder des zweiten Bauteils führt. Die Rotationsgeschwindigkeit darf dabei nicht zu hoch sein, um nicht eine übermäßige Reibung und dadurch eine übermäßige Temperaturentwicklung zu verursachen, welche wiederum Gefügestörungen bzw. beispielsweise Verzundern von Legierungselementen, wie bspw. Kohlenstoff, oder übermäßiges Anschmelzen des Materials des ersten und des zweiten Bauteils führen kann. Bevorzugt ist es, wenn zumindest das Material eines der Bauteile in einen teigigen Zustand übergeht. Nachdem die Bauteile in Rotation zueinander versetzt wurden, und die gewünschte Rotationsgeschwindigkeit erreicht ist, werden die Bauteile aufeinander zu verlagert und gegeneinander gepresst. Dabei tritt der erste Kontaktbereich in Kontakt mit dem zweiten Kontaktbereich und es findet Reibung zwischen den beiden Kontaktbereichen statt, da sie sich aufgrund der Rotation der Bauteile relativ zueinander verlagern. In den Bereichen der Kontaktbereiche, in denen Reibung stattfindet, wird die kinetische Energie des ersten und des zweiten Bauteils relativ zueinander in thermische Energie gewandelt, wobei dieser Eintrag thermischer Energie zu einem Anstieg der Temperatur im Material der beiden Kontaktbereiche bzw. der beiden Bauteile führt. Der Temperaturanstieg ist bevorzugt derart groß, dass eine Anschmelzung erreicht wird, dass also die Schmelztemperatur des Herstellungsmaterials eines der Bauteile erreicht wird. Bestehen die Bauteile aus unterschiedlichem Material mit unterschiedlichen Schmelztemperaturen, so reicht es im Allgemeinen, wenn eines der Bauteile, jenes mit der niedrigeren Schmelztemperatur, bereichsweise angeschmolzen wird und das andere, das mit der höheren Schmelztemperatur, lediglich in den Fließbereich durch Erreichen der Fließtemperatur gelangt, da trotzdem eine stoffschlüssige Verbindung zwischen dem angeschmolzenen ersten Bauteil und dem nicht angeschmolzenen zweiten Bauteil entstehen kann. Das Reibschweißverfahren eignet sich somit insbesondere zum Verschweißen von Bauteilen, die aus unterschiedlichen Herstellungsmaterialien hergestellt sind. Nachdem zwischen beiden Kontaktbereichen, dem ersten und dem zweiten Kontaktbereich, eine ausreichende Anschmelzung erzeugt ist, wird die Rotation der Bauteile relativ zueinander verzögert, d.h. die relative Rotationsgeschwindigkeit wird vermindert. Es ist dabei bevorzugt, dass die Rotationsgeschwindigkeit in der Position den Wert 0 erreicht, die beiden Bauteile sich also nicht weiter relativ zueinander bewegen, in der die Bauteile nach Beendigung des Verfahrens aneinander festgelegt sein sollen. Es kann weiterhin bevorzugt sein, dass die Rotation der Bauteile relativ zueinander bereits mit dem Moment des ersten Kontaktes zwischen dem ersten und dem zweiten Kontaktbereich verringert wird und während Anschmelzung zwischen den beiden Kontaktbereichen stattfindet, bereits sukzessive abnimmt. Ein bevorzugtes Beispiel hierfür ist das Schwungradschweißen, bei welchem beide Bauteile auf eine bestimmte Geschwindigkeit relativ zueinander gebracht werden und durch am ersten und/oder zweiten Bauteil befestigte Schwungmassen eine bestimmte kinetische Energie zur Verfügung steht, die während des Reibschweißvorgangs in thermische Energie gewandelt wird, wobei die Rotation ab dem Moment des ersten Kontaktes der beiden Bauteile permanent verlangsamt und die kinetische Energie stetig in thermische Energie gewandelt wird, bis die kinetische Energie aufgebraucht ist und die beiden Teile in der richtigen Position relativ zueinander ausgerichtet und miteinander verschweißt sind. Die mittels des erfindungsgemäßen Verfahrens zwischen dem ersten und dem zweiten Bauteil hergestellte stoffschlüssige Verbindung weist eine besonders hohe Güte auf, da durch den gleichmäßig über die beiden Kontaktbereiche eingebrachten Wärmeeintrag ein Materialverzug aufgrund von Temperaturspannungen minimiert ist. Weiterhin werden während des ersten Kontakts der beiden Bauteile bzw. der beiden Kontaktbereiche zueinander eventuell störende Oxidschichten auf den Bauteilen abgespant bzw. abgerieben und es kann ein möglichst gleichmäßiges Gefüge an der Fügefläche, mit möglichst wenigen, störenden Fremdmaterialeinschlüssen, erreicht werden.

In einer bevorzugten Ausführungsform weisen der erste Kontaktbereich und der zweite Kontaktbereich Kontaktflächen auf, die vordem Gegeneinanderpressen einander gegenüberliegend ausgerichtet werden und relativ zueinander divergierend oder konvergierend ausgebildet sind. Mit anderen Worten bedeutet dies, dass, wenn die beiden Kontaktflächen der Kontaktbereiche einander gegenüberliegend ausgerichtet sind, der Abstand der beiden Kontaktflächen zueinander entlang oder quer zur Rotationsachse zunimmt und/oder abnimmt. Bevorzugt ist beispielsweise, dass der erste Kontaktbereich am ersten Bauteil kreisrund ausgebildet ist und der zweite Kontaktbereich am zweiten Bauteil ebenfalls kreisrund ausgebildet ist, wobei jedoch der mittlere Radius der Krümmung des zweiten Kontaktbereiches kleiner oder größer als der Radius des ersten Kontaktbereiches ist. Besonders bevorzugt weist der zweite Kontaktbereich einen größeren mittleren Radius auf als der erste Kontaktbereich, wobei die Kontaktflächen der beiden Kontaktbereiche relativ zueinander divergierend ausgebildet, , so dass beim Gegeneinanderpressen der beiden Bauteile zunächst ein mittlerer Punkt des zweiten Kontaktbereiches beim ersten Kontaktbereich eingreift. Alternativ bevorzugt können die beiden Kontaktflächen zueinander konvergierend ausgebildet sein, wobei der zweite Kontaktbereich einen kleineren mittleren Radius aufweist als der erste Kontaktbereich, so dass beim Gegeneinanderpressen der beiden Bauteile zunächst zwei Enden eines beispielsweise sichel- oder halbmondförmigen zweiten Bauteils mit dem ersten Kontaktbereich in Kontakt treten. Bevorzugt ist diese konvergierende oder divergierende Auslegung der Kontaktflächen der Kontaktbereiche, um zu erreichen, dass zunächst nur bereichsweise Anschmelzung zwischen den beiden Kontaktbereichen stattfindet, und gleichzeitig zunächst nur bereichsweise Reibung zwischen den beiden Kontaktbereichen auftritt und somit das für das Anschmelzen der beiden Bauteile benötigte Drehmoment bzw. die Rotationsenergie bzw. die kinetische Energie möglichst gering gehalten werden kann, wobei die Anforderungen an die Fertigungsmaschine gering gehalten werden können.

In einer ersten bevorzugten Ausführungsform werden die Bauteile quer zur Rotationsachse gegeneinander gepresst, wobei gemäß der Erfindung das zweite Bauteil entlang seiner Umfangsrichtung ein erstes Ende und ein zweites Ende aufweist. Bei dieser bevorzugten Ausführungsform können Anbauteile exzentrisch zur Rotationsachse an das erste Bauteil, welches bevorzugt beispielsweise eine Fahrzeugachse oder ein sonstiger zylinderförmiger oder rotationssymmetrischer Tragkörper einer Fahrwerksaufhängung eines Nutzfahrzeuges sein kann, festgelegt werden. Beispielsweise kann das zweite Bauteil ein Bremsträger sein. Bevorzugt ist es ebenfalls, dass das zweite Bauteil entlang seiner Umfangsrichtung, also entlang seiner Erstreckung quer oder im Wesentlichen quer zur Rotationsachse, ein erstes und ein zweites Ende aufweist. Das zweite Bauteil ist in der Nähe des zweiten Kontaktbereiches, also bevorzugt als ein ringabschnittförmiger oder bevorzugt kreisabschnittförmiger Körper ausgelegt, wobei es bevorzugt sein kann, den zweiten Kontaktbereich als Halbkreisabschnitt bzw. halbkreisförmiger Ringabschnitt auszulegen, um das zweite Bauteil seitlich an das erste Bauteil heranführen zu können und die beiden Kontaktbereiche miteinander in Kontakt treten zu lassen. Weiterhin bevorzugt kann es sein, dass das zweite Bauteil bzw. der zweite Kontaktbereich den ersten Kontaktbereich nahezu vollständig umfasst, wobei das erste und das zweite Ende des zweiten Bauteils derart voneinander beabstandet sind, dass an ihnen eine Kraft angelegt werden kann, die beide Enden aufeinander zu bewegt, somit den Radius bzw. den mittleren Radius des zweiten Kontaktbereichs des zweiten Bauteils verringert und den zweiten Kontaktbereich auf den ersten Kontaktbereich presst, so dass Anschmelzung erzeugt wird und das zweite Bauteil nach Verzögern bzw. Stoppen der Rotation nahezu über den gesamten ersten Kontaktbereich am ersten Bauteil festgelegt ist. Es versteht sich, dass, wenn das zweite Bauteil quer zur Rotationsachse an das erste Bauteil angepresst werden soll, das zweite Bauteil nicht als ringförmiger Körper ausgelegt sein kann bzw. der zweite Kontaktbereich nicht ringförmig ausgelegt sein kann, da sonst das erste Bauteil, welches in der Aussparung des ringförmigen Körpers angeordnet wäre, nur an einer Seite bzw. an einer Hälfte der Innenfläche des Ringkörpers mit dem zweiten Bauteil in Kontakt gebracht werden könnte. Eine Ausnahme hiervon könnte vorliegen, wenn bevorzugt ein zweites Bauteil in erhitztem Zustand und damit in thermisch ausgedehntem Zustand über das erste Bauteil übergestülpt wird, während das erste Bauteil unter Rotation gehalten wird und das zweite Bauteil abkühlt, sich zusammenzieht und somit ein Presssitz und eine gleichzeitige Anschmelzung der Kontaktbereiche der beiden Bauteile erzeugt werden kann und ein, den Presssitz unterstützender Stoffschluss das zweite Bauteil am ersten Bauteil festlegt.

Von Vorteil ist es, wenn das erste Ende derart geformt ist, dass vor dem ersten Ende während des Rotationsvorganges angestautes Material in den Raum zwischen dem ersten und dem zweiten Kontaktbereich geleitet wird. Insbesondere bevorzugt kann es sein, dass das erste Ende des zweiten Kontaktbereiches angeschrägt ist bzw. derart angeschrägt ist, dass vor dem ersten Ende aufgestautes Material entlang der schrägen Kante unter den zweiten Kontaktbereich und damit in den Zwischenraum zwischen dem zweiten Kontaktbereich und dem ersten Kontaktbereich geleitet wird. Zu einem Materialstau vor dem ersten Ende kommt es, wenn das erste Ende entgegen der Rotationsrichtung des ersten Kontaktbereiches ausgerichtet ist, so dass während des Reibvorganges abgeriebenes, angeschmolzenes oder durch die Anpresskraft zwischen beiden Bauteilen herausgepresstes Material bugwellenartig vor dem ersten Ende des zweiten Kontaktbereiches gesammelt wird. Da es im Allgemeinen nicht erwünscht ist, dass das angesammelte Material auch nach Ende des Rotationsvorganges vor dem ersten Ende als Anhäufung verbleibt, sondern wieder in die Verschweißzone zwischen dem ersten und dem zweiten Kontaktbereich geleitet werden soll, ist das erste Ende derart ausgelegt bzw. geformt, dass sich das angeschmolzene Material nicht dauerhaft vordem ersten Ende aufstaut, sondern permanent in den Zwischenraum zwischen dem ersten und dem zweiten Kontaktbereich geleitet wird. Alternativ kann es auch bevorzugt sein, dass das erste Ende einen gerundeten bzw. gekrümmten Rücksprung aufweist, wobei die Rundung derart angelegt ist, dass das angestaute Material zunächst auf den größeren Querschnitt der Aussparung bzw. Rundung trifft und von diesem allmählich auf einen geringeren Querschnitt verengt wird und anschließend in den Spalt zwischen den ersten und zweiten Kontaktbereich gelangt.

Mit Vorteil weist der zweite Kontaktbereich einen mittleren Krümmungsradius auf, der kleiner ist als der Radius des ersten Kontaktbereiches, so dass beim Gegeneinanderpressen der Bauteile zuerst die Enden des zweiten Kontaktbereiches am ersten Kontaktbereich reiben und wobei sich der Bereich angeschmolzenen Materials von den Enden entlang des Umfangs des zweiten Kontaktbereiches ausbreitet. Es ist von Vorteil, wenn die Anschmelzung des ersten und des zweiten Kontaktbereiches zunächst nur bereichsweise stattfindet, um die zur Erreichung dieser Anschmelzung benötigten Drehmomente, bzw. kinetische Energie, die wiederum durch Reibung in thermische Energie gewandelt wird, möglichst gering zu halten. Als mittlerer Krümmungsradius des zweiten Kontaktbereiches wird insbesondere der mittlere Radius bei einer nicht kreisrunden Form des zweiten Kontaktbereiches bezeichnet, wobei der zweite Kontaktbereich beispielsweise elliptisch oder polygonal ausgelegt sein kann. Nach Beginn des Krafteintrages, der wiederum zum Gegeneinanderpressen der beiden Bauteile führt, wird zunächst diese erste Kontaktzone zwischen dem ersten und zweiten Kontaktbereich angeschmolzen und bereichsweise abgetragen. Da sich bevorzugt die Anschmelzungszone von den Enden des zweiten Kontaktbereiches her ausbreitet, ist schließlich der gesamte zweite Kontaktbereich mit einer angeschmolzenen Schicht überzogen und liegt am ersten Kontaktbereich an. Alternativ bevorzugt kann, wenn der mittlere Krümmungsradius des zweiten Kontaktbereiches größer ist als der Radius des ersten Kontaktbereiches, zunächst die Mitte des zweiten Kontaktbereiches mit dem ersten Kontaktbereich in Berührung geraten und sich die Zone der Anschmelzung von der Mitte heraus bis zu den Enden des zweiten Kontaktbereiches ausbreiten.

Bevorzugt ist das Verhältnis des mittleren Radius' des zweiten Kontaktbereiches zum Radius des ersten Kontaktbereiches im Bereich von 0,8 bis 0,99, bevorzugt 0,9 bis 0,98 und insbesondere bevorzugt bei 0,95. Je kleiner das Verhältnis des mittleren Radius' des zweiten Kontaktbereichs zum Radius des ersten Kontaktbereiches, desto größer ist das Übermaß, welches der erste Kontaktbereich gegenüber der vom zweiten Kontaktbereich freigelassenen Öffnung besitzt, durch welche der erste Kontaktbereich bzw. das erste Bauteil quer zur Rotationsachse bis an den zweiten Kontaktbereich des zweiten Bauteils herangeführt werden kann. Weiterhin bestimmt sich durch dieses Verhältnis die Menge des zunächst an den Enden des zweiten Kontaktbereiches abzuschmelzenden bzw. abzutragenden Materials, bevor der gesamte zweite Kontaktbereich mit dem ersten Kontaktbereich zusammentrifft und Anschmelzung über die gesamte Umfangslänge des zweiten Kontaktbereiches stattfindet.

In einer besonders bevorzugten Weise weist der zweite Kontaktbereich vor dem Gegeneinanderpressen der Bauteile einen oder eine Vielzahl von Kontaktvorsprüngen auf. Die Kontaktvorsprünge dienen, wie auch eine divergierende oder konvergierende Gestaltung der Kontaktflächen des ersten und des zweiten Kontaktbereiches, einem zunächst nur bereichsweisen Kontakt zwischen den beiden Bauteilen und somit einer zunächst nur bereichsweisen Anschmelzung des Materials des zweiten und des ersten Bauteils. Die Kontaktvorsprünge können eine trapezförmige, eine gerundete oder eine konkave bzw. konvexe Form aufweisen, wobei durch die Kontaktvorsprünge insbesondere das Fließverhalten des angeschmolzenen Materials beeinflusst werden soll bzw. dieses angeschmolzene Material im Bereich der Anschmelzungszone gehalten werden soll. Es ist weiterhin bevorzugt, dass während des Schweißvorganges die Kontaktvorsprünge abgetragen, abgerieben bzw. abgeschmolzen werden, so dass nach Ende des Schweißvorganges das Material der Kontaktvorsprünge gleichmäßig über den Umfang des ersten Kontaktbereiches verteilt ist und an der gesamten Schweißstelle zwischen dem ersten und zweiten Bauteil als Schweißmaterial dient.

Zweckmäßigerweise ragen die Kontaktvorsprünge aus der Kontaktfläche des zweiten Kontaktbereiches in Richtung der Kontaktfläche des ersten Kontaktbereiches heraus. Weiterhin kann es bevorzugt sein, dass die Enden der Kontaktvorsprünge, welche der Rotationsrichtung entgegenstehen, angeschrägt, abgerundet oder ähnlich geformt sind, um vor dem Kontaktvorsprung aufgestautes Material in den Zwischenraum zwischen Kontaktvorsprung und ersten Kontaktbereich zu leiten und somit der Anschmelzungsregion wieder zuzuführen.

Insbesondere bevorzugt ist es, dass das zweite Bauteil eine Vielzahl von zweiten Kontaktbereichen aufweist, die einen ersten Reibkontakt zum ersten Kontaktbereich herstellen, um eine erste bereichsweise Anschmelzung zwischen dem ersten und dem zweiten Kontaktbereich zu erzeugen. Es kann bevorzugt sein, insbesondere wenn Biegemomente oder Torsionsmomente vom ersten Bauteil auf das zweite Bauteil übertragen werden sollen, dass das zweite Bauteil über mehrere räumlich voneinander getrennte Kontaktstellen mit dem ersten Bauteil verbunden ist. In bevorzugter Weise, im Falle von Radialschweißen als Verfahren, d.h. die beiden Bauteile werden quer zur Rotationsachse oder im Wesentlichen quer zur Rotationsachse gegeneinander gepresst und verschweißt, ist eine Vielzahl von zweiten Kontaktbereichen bzw. ersten Kontaktbereichen längs der Rotationsachse voneinander beabstandet vorgesehen, so dass eine Anschmelzung zwischen beiden Bauteilen gleichzeitig an mehreren Kontaktbereichen, welche sich längs der Rotationsachse zwischen dem ersten und zweiten Bauteil verteilen, erzielt wird. Weiterhin ist es denkbar, das zweite Bauteil in einem beliebigen Winkel längs bzw. quer zur Rotationsachse und sämtlichen Winkelstufen dazwischen mit dem ersten Bauteil zu verschweißen, wobei der erste Kontaktbereich eine Kontaktfläche aufweisen muss, die im Wesentlichen senkrecht zur Pressrichtung bzw. zur Kraftrichtung während des Gegeneinanderpressens der beiden Bauteile gegeneinander, ausgerichtet ist, so dass auf diese Weise auch nicht radial, bzw. senkrecht, oder nicht axial ausgerichtete zweite Bauteile am ersten Bauteil festgelegt werden können.

Insbesondere kann es auch bevorzugt sein, dass die Kontaktvorsprünge, welche am zweiten Kontaktbereich oder bevorzugt auch am ersten Kontaktbereich vorgesehen sind, während des Anschmelzvorgangs bzw. während des Schweißvorgangs nicht vollständig abgetragen werden und so nach Beendigung der Rotation bzw. nach Beendigung des Schweißvorgangs das zweite Bauteil nur bereichsweise, d.h. im Bereich der Kontaktvorsprünge am ersten Bauteil festgelegt ist und dazwischen freiliegende Lücken, vorhanden sind. Dieses Merkmal kann insbesondere der Gewichtsreduzierung dienen und die zum Verschweißen der beiden Bauteile nötige Kraft bzw. Rotationsleistung oder Rotationsenergie vermindern.

Es kann bevorzugt sein, dass die Umfangslänge des zweiten Kontaktbereiches kleiner als die Hälfte der Umfangslänge des ersten Kontaktbereiches ist. Dieses Merkmal, welches insbesondere beim Gegeneinanderpressen der beiden Bauteile quer zur Rotationsrichtung zum Tragen kommt, sorgt dafür, dass das zweite Bauteil bequem seitlich, also quer zur Rotationsrichtung, an das erste Bauteil herangeführt und an diesem festgelegt werden kann. Wäre die Umfangslänge des zweiten Kontaktbereiches größer als die Hälfte der Umfangslänge des ersten Kontaktbereiches, so müsste das zweite Bauteil bzw. der zweite Kontaktbereich längs der Rotationsachse bzw. stirnseitig über das erste Bauteil übergestülpt werden und könnte erste anschließend an diesem festgelegt werden.

Weiterhin erfindungsgemäß ist eine Achseinheit vorgesehen, insbesondere für Nutzfahrzeuge, umfassend ein erstes Bauteil und ein zweites Bauteil, wobei das erste Bauteil sich im Wesentlichen entlang einer Rotationsachse erstreckt und einen rotationssymmetrisch zur Rotationsachse ausgebildeten ersten Kontaktbereich aufweist, wobei das zweite Bauteil in einem ersten Zustand einen zweiten Kontaktbereich aufweist und wobei die Achseinheit mittels eines Rotationsreibschweißverfahrens in einen zweiten Zustand bringbar ist, in dem das erste Bauteil am zweiten Bauteil im ersten bzw. zweiten Kontaktbereich zumindest bereichsweise stoffschlüssig festgelegt ist. Die Achseinheit ist also eine aus einem ersten und einem zweiten Bauteil mittels eines Rotationsreibschweißverfahrens hergestellte Baugruppe und findet Einsatz insbesondere bei Nutzfahrzeugen, besonders bevorzugt im Bereich der Fahrwerke des Nutzfahrzeuges. Das erste Bauteil weist einen im Wesentlichen entlang einer Rotationsachse rotationssymmetrischen ersten Kontaktbereich auf, in welchem das zweite Bauteil am ersten Bauteil festgelegt ist.

Weitere Vorteile und Merkmale der vorliegenden Erfindung ergeben sich aus der nachfolgenden Beschreibung bevorzugter Ausführungsbeispiele der erfindungsgemäßen Achseinheit und des erfindungsgemäßen Verfahrens zur Herstellung von Fahrwerkskomponenten für Nutzfahrzeuge. Einzelne Merkmale der verschiedenen Ausführungsformen können dabei im Rahmen der Erfindung miteinander kombiniert werden. Gegenständliche Merkmale der Achseinheit können auch zur näheren Beschreibung des erfindungsgemäßen Verfahrens angewendet werden.

Es zeigen:
- Fig. 1: eine Schnittansichten einer Ausführungsform der erfindungsgemäßen Achseinheit vor Anwenden des Verfahrens in Fig. 1 a) und nach Abschluss des stoffschlüssigen Festlegens in Fig. 1 b),
- Fig. 2: eine Schnittansicht einer Form einen Achseinheit im Zustand vordem stoffschlüssigen Festlegen,
- Fig. 3: eine Schnittansicht des ersten und des zweiten Kontaktbereiches mit der Ausführungsform des Kontaktvorsprunges im Zustand vor der Durchführung des erfindungsgemäßen Verfahrens zum stoffschlüssigen Festlegen,
- Fig. 4: eine Ansicht einer bevorzugten Ausführungsform des ersten und des zweiten Bauteils im Zustand vor dem Anwenden des erfindungsgemäßen Verfahrens zum Festlegen beider Bauteile aneinander, und
- Fig. 5: eine Ansicht bevorzugter Ausführungsformen des zweiten Bauteils.

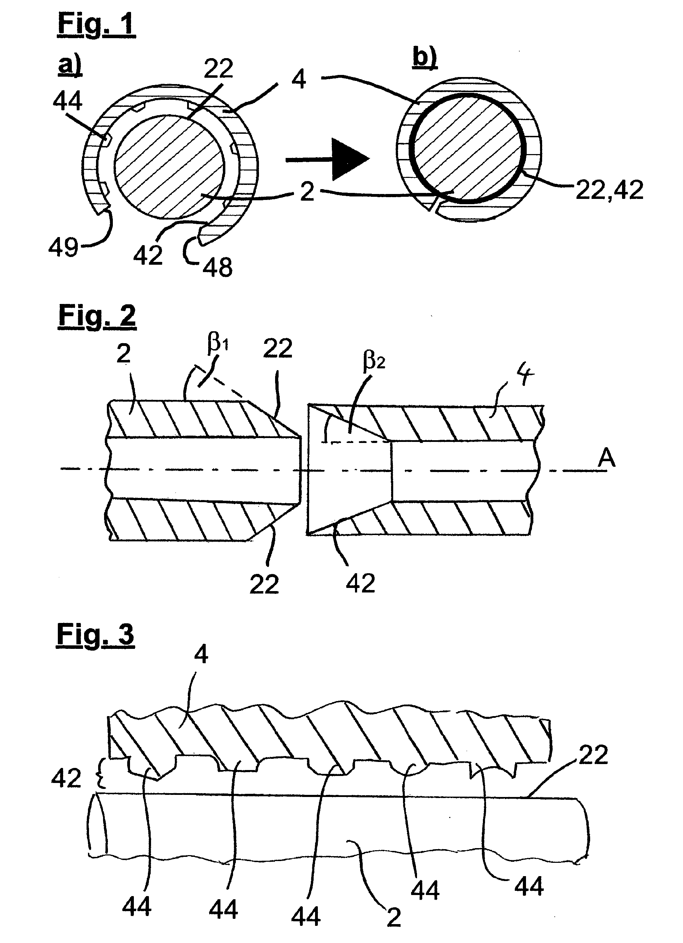

Figuren 1 a) und b) zeigen Schnittansichten einer bevorzugten Ausführungsform der erfindungsgemäßen Achseinheit in zwei Zuständen. Fig. 1 a) zeigt dabei den ersten Zustand, vor der Durchführung des erfindungsgemäßen Verfahrens zur Herstellung von Fahrwerkskomponenten für Nutzfahrzeuge. In diesem ersten Zustand wird ein erstes Bauteil 2 und ein zweites Bauteil 4 bereitgestellt. An der dem ersten Bauteil 2 gegenüberliegenden Seite weist das zweite Bauteil 4 einen zweiten Kontaktbereich 42 auf. Dieser zweite Kontaktbereich 42 ist erfindungsgemäß gekrümmt, bevorzugt um zumindest einen Punkt der im ersten Bauteil 2 angeordnet ist. Wie in der Figur gezeigt weist das zweite Bauteil 4 bevorzugt einen ringförmigen Abschnitt auf, bzw. ist in der Schnittansicht ringförmig ausgebildet, und umgibt das erste Bauteil 2 zumindest bereichsweise. Insbesondere ist dabei, wie in Fig. 1 a) gezeigt, der mittlere Krümmungsradius des zweiten Kontaktbereiches 42 größer als der Radius eines ersten Kontaktbereiches 22 des ersten Bauteils 2, damit wenn auch die Umfangslänge des zweiten Kontaktbereiches 42 größer ist als die Hälfte der Umfangslänge des ersten Kontaktbereiches 22, das zweite Bauteil 4 über das erste Bauteil 2 übergestülpt werden kann. Das zweite Bauteil 4 weist bevorzugt zwei Enden 48 und 49 auf, von denen das erste Ende 48 bevorzugt eine Anschrägung, bzw. eine Anfasung aufweist. Diese Anschrägung, bzw. Anfasung des ersten Endes 48 des zweiten Bauteils 4 dient bevorzugt dazu, aufgestautes Material in den Zwischenraum zwischen erstem und zweitem Kontaktbereich 22, 42 zu leiten. Das erste Ende 48 kann bevorzugt auch eine konvex, oder eine konkav gerundete Anfasung aufweisen. Weiterhin weist der zweite Kontaktbereich 42 bevorzugt zumindest einen Kontaktvorsprung 44 auf, der vom zweiten Kontaktbereich 42 abstehend zum ersten Kontaktbereich 22 hin ragt. Bevorzugt können mehrere, über den zweiten Kontaktbereich 42 verteilte Kontaktvorsprünge 44 vorgesehen sein, wie in Fig. 1 a) dargestellt. Um das erste und das zweite Bauteil 2, 4 in den in Fig. 1 b) gezeigten Zustand, in dem das erste Bauteil 2 stoffschlüssig am zweiten Bauteil 4 festgelegt ist, zu überführen, wird das erfindungsgemäße Verfahren zum stoffschlüssigen Festlegen von Fahrwerkskomponenten eingesetzt. Dabei werden das erste und das zweite Bauteil 2, 4 in Rotation zueinander versetzt und anschließend derart gegeneinander gepresst, dass der erste und der zweite Kontaktbereich 22, 42 in Kontakt miteinander treten und Reibung stattfindet. Die Rotationsrichtung der beiden Bauteile 2,4 ist in der in der Figur gezeigten Ausführung bevorzugt so vorgesehen, dass das zweite Bauteil 4 mit seinem ersten Ende 48 voran gegenüber dem ersten Bauteil 2 rotiert, um ein Ableiten von aufgestautem Material durch die Anschrägung des ersten Endes 48 zu ermöglichen. Es kann bevorzugt das erste Bauteil 2 rotieren, bei der in der Figur gezeigten Ausführungsform bevorzugt gegen den Uhrzeigersinn, während das zweite Bauteil 4 ortsfest gehalten wird. Es ist zu erwarten, dass bei Rotation nur des ersten Bauteils 2, bevorzugt die Achse eines Nutzfahrzeugs, ein geringerer maschineller Aufwand nötig ist, als bei Rotation eines ganzen, quer zur Rotationsachse A weiter ausladenden zweiten Bauteils 4. Weiterhin wird das zweite Bauteil 4 erfindungsgemäß gegen das erste Bauteil 2 gepresst, wobei insbesondere die beiden Kontaktbereiche 22 und 42 gegeneinander gepresst werden. Bei der in der Figur gezeigten bevorzugten Ausführungsform ist hierfür eine Verformung des zweiten Bauteils 4 nötig, wobei dessen Enden 48 und 49 aufeinander zu verlagert werden, so dass der mittlere Krümmungsradius R₂ verringert wird bis die Kontaktvorsprünge 44 mit dem ersten Kontaktbereich 22 in Reibkontakt treten. Durch die Reibung zwischen den Kontaktvorsprüngen 44 und dem ersten Kontaktbereich 22 steigt die Temperatur in der Kontaktzone, bei ausreichender Anpresskraft und Rotationsdrehzahl bis hin zur Schmelztemperatur des Herstellungsmaterials des ersten Bauteils 2 und/oder des zweiten Bauteils 4. Es findet eine zunächst nur lokale Anschmelzung des ersten und des zweiten Kontaktbereiches 22, 42 statt. Bevorzugt werden dabei die Kontaktvorsprünge 44 abgetragen, das von ihnen abgeschmolzene Material bildet eine den ersten Kontaktbereich umgebende Zone angeschmolzenem Materials. Nachdem eine ausreichende Anschmelzung des ersten und/oder des zweiten Kontaktbereiches 22, 42 vorliegt, kann die Rotation der Bauteile 2, 4 zueinander angehalten werden, wobei durch Wegfall der Reibung zwischen den Kontaktbereichen 22, 42 die Temperatur in der Anschmelzungszone, in Fig. 1 b) fett dargestellt und mit 22, 42 bezeichnet, sinkt und das angeschmolzene Material erstarrt. Das Ergebnis des Verfahrens ist eine stoffschlüssige Verbindung zwischen dem ersten und dem zweiten Bauteil 2, 4, hergestellt durch eine zwischen erstem und zweitem Bauteil 2, 4 gleichmäßig verteilte Schweißzone. Das hier beschriebene Verfahren wird bevorzugt als Radialrotationsreibschweißen bezeichnet, da die Bauteile 2,4 im Wesentlichen quer zur Rotationsachse gegeneinander gepresst werden.

Fig. 2 zeigt ein erstes Bauteil 2 und ein zweites Bauteil 4 in einem Zustand vor der Durchführung eines Verfahrens zum Verbinden von Fahrwerkskomponenten. Dabei sind die Kontaktbereiche 22 und 42 der Bauteile 2 und 4 derart ausgelegt, dass sie entlang der Rotationsachse A aufeinander zu verlagert und gegeneinander gepresst werden. Der erste Kontaktbereich 22 ist bevorzugt als Mantelfläche eines Kegelstumpfes ausgeführt, wobei die Schnittkanten der Mantelfläche bevorzugt mit einem Winkel β₁ gegenüber der Rotationsachse A geneigt sind. Der zweite Kontaktbereich 42 weist eine bevorzugt zumindest bereichsweise mit dem ersten Kontaktbereich korrespondierende Geometrie auf. Wie in Fig. 2 gezeigt ist der zweite Kontaktbereich 42 bevorzugt trichterförmig ausgebildet, wobei die Schnittkanten der nach innen weisenden Fläche des zweiten Kontaktbereiches 42 mit einem Winkel β₂ gegen die Rotationsachse A geneigt sind. Insbesondere bevorzugt unterscheiden sich β₁ und β₂, so dass beim Aufeinandertreffen der beiden Kontaktbereiche zunächst nur ein schmaler Kontaktstreifen zwischen dem ersten und dem zweiten Bauteil 2, 4 entsteht, welcher dann durch das Voranschreiten der Anschmelzungszone weiter wächst, bis das erste und das zweite Bauteil in einer ausreichend großen Kontaktzone miteinander verbunden sind. Der Vorteil dieses Kontakts zwischen beiden Bauteilen 2, 4 in einem zunächst nur kleinen Bereich liegt darin, dass das zur Erzeugung der entsprechenden thermischen Energie durch Reibung zwischen den Bauteilen 2, 4 nötige Drehmoment und die Anpresskraft gering gehalten werden kann, da nicht der gesamte erste Kontaktbereich 22 am zweiten Kontaktbereich 42 reibt. Weiterhin ergibt sich die Möglichkeit, durch Überwachung des Fortschritts der Anschmelzung den Verfahrensablauf genau zu beurteilen. Die in Fig. 2 gezeigte Auslegung und Anordnung der Bauteile 2 und 4 zueinander wird bevorzugt als Axialrotationsreibschweißen bezeichnet, da die zueinander rotierenden Bauteile 2, 4 im Wesentlichen längs der Rotationsachse A gegeneinander gepresst werden. Bevorzugt ist β₁ größer als β₂, wobei in diesem Fall, die Anschmelzung der Kontaktbereiche 22 und 42 von in der Figur links her erfolgt. Weiterhin kann es bevorzugt sein, dass das erste Bauteil 2 einen trichterförmigen ersten Kontaktbereich 22 aufweist während das zweite Bauteil 4 einen kegelstumpfförmigen zweiten Kontaktbereich 42 aufweist. Weiterhin bevorzugt kann zumindest einer der beiden Kontaktbereiche eine gerundete, konkave oder konvexe Querschnittsgeometrie aufweisen, wobei durch die jeweilige Paarung der Geometrien der beiden Kontaktbereiche 22, 42 der Bereich des ersten Kontakts zwischen den Bauteilen 2, 4 und der zeitliche und räumliche Verlauf der Ausbreitung der Anschmelzungszone beeinflusst werden kann.

Fig. 3 zeigt Querschnittsansichten verschiedener, bevorzugter Ausführungsformen des Kontaktvorsprungs 44 der im zweiten Kontaktbereich 42 vor Durchführung des erfindungsgemäßen Verfahrens vorgesehen ist. Dabei können spitz zulaufende, rechteckige, trapezförmige gerundete, positiv gekrümmte, bzw. konvexe und/oder negativ gekrümmte, bzw. konkave Querschnittsformen zur Anwendung gelangen. Die Querschnittsform des Kontaktvorsprunges 44 kann dabei insbesondere den Bereich des ersten Kontakts zwischen den Bauteilen 2, 4 und den zeitlichen und räumlichen Verlauf der Ausbreitung der Anschmelzungszone beeinflussen. So wird beispielsweise bei der, in der Figur rechts gezeigten, bevorzugten konkaven Querschnittsform des Kontaktvorsprunges 44, angeschmolzenes Material in den Raum zwischen den beiden spitz zulaufenden Enden des Kontaktvorsprungs geleitet, während die Enden im Laufe des Reibvorgangs bevorzugt zumindest teilweise abgetragen, bzw. abgeschmolzen werden.

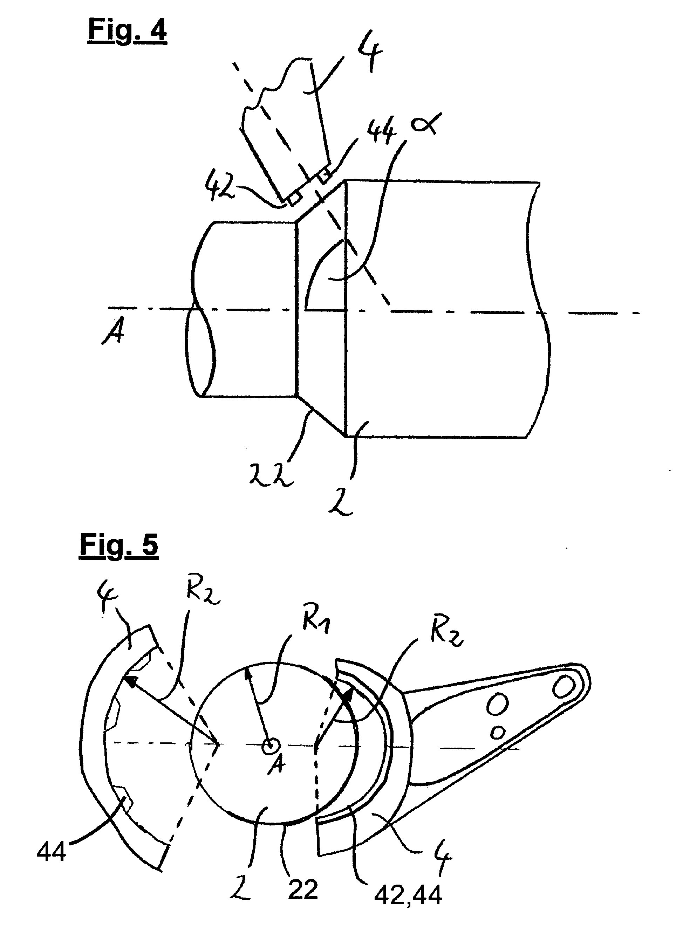

In Fig. 4 ist ein weiteres bevorzugtes Ausführungsbeispiel für das erfindungsgemäße Verfahren zum Festlegen von Fahrwerkskomponenten gezeigt. Dabei wird ein zweites Bauteil 4 entlang einer zur Rotationsachse mit einem Winkel α angestellten Richtung gegen ein erstes Bauteil 2 verlagert und gepresst. Das zweite Bauteil 4, weist bevorzugt Kontaktvorsprünge 44 auf, die mit dem, in der Schnittansicht senkrecht zur Richtung der Verlagerung ausgerichteten, ersten Kontaktbereich 22 in Kontakt treten. Vorteilhaft bei dieser Ausführungsform ist es, dass an ein rotierendes, zumindest in einem ersten Kontaktbereich 22 rotationssymmetrisch ausgebildetes erstes Bauteil 2 ein zweites Bauteil 4 stoffschlüssig angefügt werden kann, ohne dass der zweite Kontaktbereich 42 des zweiten Bauteils 4 rotationssymmetrisch ausgebildet sein muss. Es können bevorzugt eine Vielzahl zweiter Bauteile 4 gleichzeitig an einem ersten Bauteil 2 festgelegt werden, wobei die zweiten Bauteile 4 bevorzugt radial und/oder axial zueinander versetzt angeordnet werden. Für einen bevorzugten Winkel α von 0° werden die Bauteile 2, 4 also längs der Rotationsachse A gegeneinander gepresst und es liegt ein reines Axialrotationsreibschweißverfahren vor. Für einen bevorzugten Winkel α von 90° werden die Bauteile 2, 4 also quer zur Rotationsachse A gegeneinander gepresst und es liegt ein radiales Rotationsreibschweißverfahren vor. Der Winkelbereich zwischen diesen beiden Extremwerten des Winkels α dient insbesondere dazu, ein zweites Bauteil 4, das Kräfte in eine bestimmte Richtung an das erste Bauteil 2 übertragen soll, in genau dieser Richtung am ersten Bauteil 2 festzulegen.

Fig. 5 schließlich zeigt eine Ansicht längs der Rotationsachse A zweier bevorzugter Ausführungsformen des ersten und zweiten Bauteils 2, 4 vor der Durchführung des erfindungsgemäßen Verfahrens. Dabei weisen die gezeigten zweiten Bauteile 4 jeweils einen gekrümmten zweiten Kontaktbereich 42 mit einem Krümmungsradius R₂ auf. Das erste Bauteil 2 ist in seinem ersten Kontaktbereich 22 bevorzugt kreisrund ausgebildet und weist einen Radius R₁ auf. Das in der Figur links gezeigte zweite Bauteil 4 weist einen Krümmungsradius R₂ auf, der bevorzugt größer ist als der Radius R₁ des ersten Bauteils 2. Wird dieses zweite Bauteil 4 gegen das erste Bauteil 2 gepresst, so wird der erste Kontakt und damit die erste Anschmelzung in der Mitte des zweiten Kontaktbereiches 42, also auf Höhe der horizontal eingezeichneten, gestrichelten Linie, stattfinden und sich anschließend bis zu den beiden Enden des zweiten Kontaktbereiches 42 ausbreiten. Das in der Figur rechts gezeigte zweite Bauteil 4 weist einen Krümmungsradius R₂ auf, der kleiner ist als der Radius R₁ des ersten Bauteils 2. Wird dieses zweite Bauteil 4 gegen das erste Bauteil 2 gepresst, so wird ein erster Kontakt und eine erste Anschmelzung zunächst an den Enden des zweiten Kontaktbereiches 42 stattfinden und sich zur Mitte des zweiten Kontaktbereiches 42 hin ausbreiten.

### Bezugszeichenliste:

- 2: - erstes Bauteil
- 4: - zweites Bauteil
- 22: - erster Kontaktbereich
- 42: - zweiter Kontaktbereich
- 44: - Kontaktvorsprung
- 48: - erstes Ende des zweiten Kontaktbereiches
- 49: - zweites Ende des zweiten Kontaktbereiches
- A: - Rotationsachse
- α: - Anpresswinkel rel. zu A
- β₁: - Winkel erster Kontaktbereich
- β₂: - Winkel zweiter Kontaktbereich
- R₁: - Radius der ersten Kontaktbereiches
- R₂: - mittlerer Radius des zweiten Kontaktbereiches

## Patentansprüche

1. Verfahren zur Herstellung von Fahrwerkskomponenten für Nutzfahrzeuge umfassend die Schritte:
a) Bereitstellen eines ersten Bauteils (2) und eines zweiten Bauteils (4), wobei das erste Bauteil (2) einen ersten Kontaktbereich (22) aufweist, in dem es im Wesentlichen rotationssymmetrisch um eine Rotationsachse (A) ausgebildet ist,
wobei das zweite Bauteil (4) einen zweiten Kontaktbereich (42) aufweist, der gekrümmt ist und dem ersten Kontaktbereich (22) gegenüberliegend angeordnet wird, und **dadurch gekennzeichnet dass** das zweite Bauteil (4) entlang seiner Umfangsrichtung ein erstes Ende (48) und ein zweites Ende (49) aufweist, und **gekennzeichnet durch**:
b) Versetzen eines der Bauteile (2, 4) in Rotation um die Rotationsachse (A) relativ zum jeweils anderen Bauteil (4, 2),
c) Gegeneinanderpressen der Bauteile (2, 4) quer zur Rotationsachse (A), um zwischen dem zweiten Kontaktbereich (42) und dem ersten Kontaktbereich (22) Reibung und eine Anschmelzung im ersten und zweiten Kontaktbereich (22, 42) zu erzeugen,
d) Verzögern der Rotation der Bauteile (2, 4) relativ zueinander, wobei die angeschmolzenen Bereiche in den festen Aggregatzustand übergehen und eine stoffschlüssige Verbindung zwischen dem ersten Bauteil (2) und dem zweiten Bauteil (4) hergestellt wird.

2. Verfahren nach Anspruch 1,
wobei der erste Kontaktbereich (22) und der zweite Kontaktbereich (42) Kontaktflächen aufweisen, die vor dem Gegeneinanderpressen einander gegenüber liegend ausgerichtet werden und relativ zueinander divergierend oder konvergierend ausgebildet sind.

3. Verfahren nach einem der vorhergehenden Ansprüche,
wobei das erste Ende (48) derart geformt ist, dass vor dem ersten Ende (48) während des Rotationsvorganges angestautes Material in den Raum zwischen dem ersten und dem zweite Kontaktbereich (22, 42) geleitet wird.

4. Verfahren nach einem der vorhergehenden Ansprüche,
wobei der zweite Kontaktbereich (42) einen mittleren Krümmungsradius (R₂) aufweist, der kleiner ist als der Radius (R₁) des ersten Kontaktbereiches (22), so dass beim Gegeneinanderpressen der Bauteile (2, 4) zuerst die Enden (48, 49) des zweiten Kontaktbereiches (42) am ersten Kontaktbereich (22) reiben, und
wobei sich der Bereich angeschmolzenen Materials von den Enden (48, 49) entlang des Umfangs des zweiten Kontaktbereiches (42) ausbreitet.

5. Verfahren nach Anspruch 4, wobei das Verhältnis des mittleren Radius (R₂) des zweiten Kontaktbereiches (42) zum Radius (R₁) des ersten Kontaktbereiches (22) im Bereich von 0,8 bis 0,99, bevorzugt von 0,9 bis 0,98 und insbesondere bevorzugt bei ca. 0,95 liegt.

6. Verfahren nach einem der vorhergehenden Ansprüche,
wobei der zweite Kontaktbereich (42) vor dem Gegeneinanderpressen der Bauteile (2, 4) einen oder eine Vielzahl von Kontaktvorsprüngen (44) aufweist.

7. Verfahren nach einem der vorhergehenden Ansprüche,
wobei das zweite Bauteil (4) eine Vielzahl von zweiten Kontaktbereichen (42) aufweist, die einen ersten Reibkontakt zum ersten Kontaktbereich (22) herstellen, um eine erste, bereichsweise Anschmelzung zwischen erstem und zweitem Kontaktbereich (22, 42) zu erzeugen.

8. Achseinheit, insbesondere für Nutzfahrzeuge,
umfassend ein erstes Bauteil (2) und ein zweites Bauteil (4),
wobei das erste Bauteil (2) sich im Wesentlichen entlang einer Rotationsachse (A) erstreckt und einen rotationssymmetrisch zur Rotationsachse (A) ausgebildeten ersten Kontaktbereich (22) aufweist,
dadurch gekennz eichnet dass das zweite Bauteil (4) in einem ersten Zustand einen zweiten KontaktBereich (42) sowie entlang seiner Umfangsrichtung ein erstes Ende (48) und ein zweites Ende (49) aufweist, und
wobei die Achseinheit mittels eines Rotationsreibschweißverfahrens gemäß Anspruch 1 in einen zweiten Zustand bringbar ist, in dem das erste Bauteil (2) am zweiten Bauteil (4) im ersten bzw. zweiten Kontaktbereich (22, 42) zumindest bereichsweise stoffschlüssig festgelegt ist.

## Claims

1. A method for producing chassis components for commercial vehicles, comprising the following steps:
a) providing a first element (2) and a second element (4), wherein the first element (2) has a first contact region (22), in which it is designed essentially rotationally symmetrically about a rotational axis (A), wherein the second element (4) has a second contact region (42), which is curved and arranged opposite the first contact region (22), and **characterized in that** the second element (4) along its circumferential direction has a first end (48) and a second end (49), and **characterized by**
b) causing one of the elements (2, 4) to rotate about the rotational axis (A) relative to the respective other element (4, 2),
c) pressing the elements (2, 4) against one another across the rotational axis (A) such as to generate friction between the second contact region (42) and the first contact region (22) and partial melting in the first and second contact regions (22; 42),
d) delaying the rotation of the elements (2, 4) relative to one another, wherein the partially melted regions transition into the solid state and a bonded connection is established between the first element (2) and the second element (4).

2. The method of claim 1,
wherein the first contact region (22) and the second contact region (42) have contact surfaces, which before being pressed against one another are aligned such that they lie opposite one another and are designed such that they diverge or converge relative to one another.

3. The method of any one of the preceding claims,
wherein the first end (48) is formed such that material accumulated in front of the first end (48) during the rotation is guided into the space between the first and second contact regions (22, 42).

4. The method of any one of the preceding claims,
wherein the second contact region (42) has a mean radius of curvature (R₂), which is smaller than the radius (R₁) of the first contact region (22) so that when pressing the elements (2, 4) against one another, at first the ends (48, 49) of the second contact region (42) grind or rub against the first contact region (22), and
wherein the area of partially melted material expands from the ends (48, 49) along the circumference of the second contact region (42).

5. The method of claim 4,
wherein the relationship of the mean radius (R₂) of the second contact region (42) to the radius (R₁) of the first contact region (22) is in the range of 0.8 to 0.99, preferably 0.9 to 0.98, and particularly preferably about 0.95.

6. The method of any one of the preceding claims,
wherein before pressing the elements (2, 4) against one another, the second contact region (42) comprises one or a plurality of contact projections (44).

7. The method of any one of the preceding claims,
wherein the second element (4) comprises a plurality of second contact regions (42), which provide a first friction contact with the first contact region (22) in order to generate over a certain area a first partial melting between the first and second contact regions (22, 42).

8. Axle unit, in particular for commercial vehicles,
comprising a first element (2) and a second element (4),
wherein the first element (2) extends essentially along a rotational axis (A) and comprises a first contact region (22), which is designed rotationally symmetrically relative to the rotational axis (A),
**characterized in that** in a first state the second element (4) comprises a second contact region (42) as well as a first end (48) and a second end (49) along its circumferential direction, and
wherein the axle unit may be brought into a second state by means of a rotational friction welding method according to claim 1, in which state the first element (2) at least over a certain area has a bonded connection with the second element (4) in the first or second contact region (22, 42).

## Revendications

1. Procédé pour la fabrication de composants du train de roulement pour véhicules utilitaires, comprenant les étapes consistant à :
a) préparer un premier élément structurel (2) et un second élément structurel (4), ledit premier élément structurel (2) présentant une première zone de contact (22) dans laquelle il est réalisé sensiblement à symétrie de révolution autour d'un axe de rotation (A),
ledit second élément structurel (4) présentant une seconde zone de contact (42), qui est incurvée et qui est agencée à l'opposé de la première zone de contact (22), et
**caractérisé en ce que**
le second élément structurel (4) comporte, le long de sa direction périphérique, une première extrémité (48) et une seconde extrémité (49), et
b) déplacer l'un des éléments structurels (2, 4) en rotation autour de l'axe de rotation (A) relativement à l'autre élément structurel respectif (4, 2),
c) presser les éléments structurels (2, 4) l'un contre l'autre transversalement à l'axe de rotation (A) afin d'engendrer une friction entre la seconde zone de contact (42) et la première zone de contact (22) et provoquer une fusion dans la première et dans la seconde zone de contact (22, 42),
d) ralentir la rotation des éléments structurels (2, 4) l'un par rapport à l'autre, de sorte que les zones mises en fusion se transforment vers un état d'agglomération solide et qui s'établit une liaison à coopération de matières entre le premier élément structurel (2) et le second élément structurel (4).

2. Procédé selon la revendication 1,
dans lequel la première zone de contact (22) et la seconde zone de contact (42) comportent des surfaces de contact orientées à l'opposé l'une de l'autre avant d'être pressées l'une contre l'autre, et qui sont réalisées de manière à diverger ou à converger l'une par rapport à l'autre.

3. Procédé selon l'une des revendications précédentes,
dans lequel la première extrémité (48) est formée de telle manière que le matériau qui s'accumule devant la première extrémité (48) pendant le processus de rotation est amené dans l'espace entre la première et la seconde zone de contact (22, 42).

4. Procédé selon l'une des revendications précédentes,
dans lequel la seconde zone de contact (42) présente un rayon de courbure moyen (R₂) qui est plus petit que le rayon (R₁) de la première zone de contact (22), de sorte que lorsqu'on presse les éléments structurels (2, 4) l'un contre l'autre, ce sont tout d'abord les extrémités (48, 49) de la seconde zone de contact (42) qui entrent en friction contre la première zone de contact (22), et
dans lequel la zone du matériau en fusion se propage depuis les extrémités (48, 49) le long de la périphérie de la seconde zone de contact (42).

5. Procédé selon la revendication 4,
dans lequel le rapport du rayon moyen (R₂) de la seconde zone de contact (42) sur le rayon (R₁) de la première zone de contact (22) est dans la plage de 0,8 à 0,99, de préférence de 0,9 à 0,98, et de manière particulièrement préférée d'environ 0,95.

6. Procédé selon l'une des revendications précédentes,
dans lequel la seconde zone de contact (42) comporte, avant de presser les éléments structurels (2, 4) l'un contre l'autre, une saillie de contact (44) ou une pluralité de saillies de contact.

7. Procédé selon l'une des revendications précédentes,
dans lequel le second élément structurel (4) comporte une pluralité de secondes zones de contact (42), qui établissent un premier contact de friction par rapport à la première zone de contact (22), afin d'engendrer une première mise en fusion locale entre la première et la seconde zone de contact (22, 42).

8. Unité d'essieu, en particulier pour véhicules utilitaires,
comprenant un premier élément structurel (2) et un second élément structurel (4), dans laquelle le premier élément structurel (2) s'étend sensiblement le long d'un axe de rotation (A) et comporte une première zone de contact (22) réalisée à symétrie de révolution par rapport à l'axe de rotation (A),
**caractérisé en ce que** le second élément structurel (4) présente, dans un premier état, une seconde zone de contact (42) et une première extrémité (48) et une seconde extrémité (49) le long de sa direction périphérique, et
dans laquelle l'unité d'essieu est susceptible d'être amenée, au moyen d'un procédé de soudage par friction-rotation selon la revendication 1, dans un second état dans lequel le premier élément structurel (2) est immobilisé au moins localement à coopération de matières sur le second élément structurel (4) dans la première ou respectivement la seconde zone de contact (22, 42).
